# DEMANDE DE BREVET EUROPEEN

(11) **EP 0 649 770 A1**
(43) Date de publication de la demande: **26.04.1995**
(21) Numéro de dépôt: 94401968.6
(22) Date de dépôt: 05.09.1994
(51) Int. Cl.: B60N 2/02

(54) **Commande automatique du réglage d'un siège de véhicule ajustable pour moteur**

(30) Priorité: 20.10.1993 FR 9312513
(71) Demandeur: ECIA - EQUIPEMENTS ET COMPOSANTS POUR L'INDUSTRIE AUTOMOBILE, F-25400 Audincourt (FR)
(72) Inventeur: Rudi, Alain, F-90850 Essert (FR); Marchal, Philippe, F-25400 Audincourt (FR); Escarvage, Gérard, F-25700 Valentigney (FR); Bak, Philippe, F-25700 Valentigney (FR); Guichard, Bruno, F-25400 Audincourt (FR); Stilinovic, Renato, F-25460 Etupes (FR); Peugeot, Michel, F-25230 Seloncourt (FR)
(74) Mandataire: Polus, Camille

(57) **Abrégé**

Le dispositif comprend un boîtier formé d'un alvéole (11) équipé d'un agencement (110) pour recevoir, supporter et connecter électriquement au moins une carte qui porte un circuit électronique et qui est pourvue d'un connecteur au moteur et à la source d'énergie, d'une chambre (12) équipée de moyens (120) pour insérer une carte à puce et échanger et mémoriser des informations avec celle-ci relatives à la position du siège, d'un conduit (13) reliant alvéole (11) et chambre (12) et destiné à recevoir un raccord (131) électrique pour connecter électriquement l'agencement (110) de l'alvéole (11) et les moyens (120) de la chambre (12), et d'une fixation (14) pour assujettir le boîtier au siège.

Application notamment au siège d'un véhicule automobile terrestre.

## Description

La présente invention concerne un dispositif pour la commande automatique du réglage de la position d'un siège articulé réglable et, plus particulièrement, un tel dispositif pour un siège réglable à l'aide d'au moins un moteur alimenté par une source d'énergie et à actionnement manuel, par exemple pour un siège destiné à équiper un véhicule automobile terrestre.

Comme il est connu les sièges en particulier ceux de véhicules automobiles notamment terrestres, sont réglables.

De tels sièges comprennent une assise, un dossier relié à l'assise par une articulation et muni le plus souvent d'un repose-tête. L'assise et le dossier d'un tel siège sont équipés de coussins qui dans certains cas ont au moins localement une conformation adaptable à la morphologie de son occupant. Habituellement, un tel siège est monté sur le sol ou le plancher d'un véhicule par l'intermédiaire de glissières orientées selon la direction longitudinale du véhicule.

Un tel siège articulé autorise de nombreux réglages. On peut modifier la position longitudinale de l'ensemble du siège en le faisant coulisser vers l'avant ou vers l'arrière par rapport à 13 direction longitudinale du véhicule. On peut modifier l'assiette de l'assise et de tout ce qui lui est associé, en changeant sa hauteur générale par rapport au plancher ou bien en agissant sur son orientation en modifiant seulement la hauteur de la partie antérieure ou de la partie postérieure de l'assise de manière à modifier sa direction relativement à l'horizontale. On peut aussi modifier l'inclinaison du dossier par rapport à l'assise en faisant tourner d'une manière continue et progressive ou non le dossier. On peut aussi modifier l'extension du repose-tête au-dessus du dossier et, parfois, aussi modifier sa proéminence vers l'avant ou l'arrière relativement au dossier en faisant monter ou descendre voire tourner le repose-tête. On peut aussi parfois modifier la configuration de l'un au moins des coussins souvent pour la partie lombaire du dossier en gonflant ou déformant le coussin de manière à l'adapter à la morphologie de l'occupant. On peut aussi escamoter l'ensemble du siège pour faciliter l'accès à ce qui se trouve en arrière de lui en le faisant coulisser vers l'avant et en rabattant le dossier.

L'architecture d'un siège est très souvent faite d'une manière telle que les divers réglages sont indépendants les uns des autres, la modification de l'un d'eux ne perturbant pas les autres.

La plupart des réglages d'un tel siège se font manuellement. Toutefois, il existe des solutions où les réglages sont assurés à l'aide d'au moins un moteur par exemple électrique, alimenté par une source d'énergie telle la batterie du véhicule. Il suffit alors d'actionner manuellement des manettes ou boutons appropriés portés par une platine judicieusement disposée à portée de main de l'utilisateur.

Une solution d'un tel siège articulé réglable motorisé à actionnement manuel des moteurs à l'usage d'un véhicule automobile terrestre est, par exemple, illustrée par le document FR 2 596 336 auquel on pourra se reporter utilement pour plus ample information.

Si le siège décrit dans ce document donne relativement satisfaction, il ne convient pas à toutes les situations.

En effet, lorsqu'un utilisateur d'un siège peut régler celui-ci, il cherche à donner au siège une position qui lui est propre et personnelle et qui lui assure la sensation de confort maximum qu'il recherche à ce moment, que cet occupant soit conducteur ou passager. Or, on sait que la position propre à un occupant peut différer au cours du temps et, de toute manière, varie d'un occupant à un autre.

Chaque utilisateur qui prend place sur un siège est donc conduit à agir sur certains au moins des différents réglages pour placer le siège dans la situation qui lui convient. Ces opérations sont fastidieuses et relativement longues.

Pour palier les inconvénients liés à ces opérations de réglage ou à leurs retouches, certains sièges sont équipés d'une mémoire électronique associée à un clavier qui est doté d'autant de touches que d'utilisateurs potentiels. Chaque utilisateur peut ainsi stocker dans la mémoire électronique les paramètres des réglages qu'il a choisis, une fois ces réglages faits, par actionnement manuel de la touche qui lui est spécifiquement attribuée. Ceci est vrai pour chacun des occupants ou utilisateurs du véhicule. Lorsqu'un autre utilisateur succède à celui qui occupait antérieurement le siège, il suffit au nouvel occupant d'actionner la touche qui lui est réservée pour que le réglage du siège se fasse automatiquement en fonction des informations qui ont été préalablement mémorisées.

Une telle solution, pour séduisante qu'elle soit, a cependant des inconvénients. En effet, le nombre de touches du clavier, donc d'utilisateurs potentiels, est relativement limité et restreint sous peine d'avoir à utiliser un clavier d'encombrement rédhibitoire. En outre, une erreur de manipulation du clavier peut conduire à modifier les paramètres de réglage qui sont stockés dans la mémoire et qui concernent un autre utilisateur. Enfin et particulièrement dangereux par ses conséquences éventuelles, une action intempestive sur le clavier peut provoquer une modification des réglages d'une manière inopinée du siège du conducteur alors que celui-ci pilote le véhicule.

Le but de l'invention est de remédier à la plupart de ces inconvénients.

L'invention concerne un dispositif pour la commande automatique du réglage de la position d'un siège réglable à l'aide d'au moins un moteur par exemple électrique alimenté par une source d'énergie telle la batterie d'un véhicule automobile terrestre. Pour un tel siège, un moteur électrique associé à la cinématique du siège anime le déplacement de l'un des éléments réglables du siège et un capteur de position approprié implanté sur la cinématique détecte et mesure en permanence la position dans l'espace de l'élément déplacé et produit les signaux et informations nécessaires pour localiser l'élément déplacé et suivre sa trajectoire.

L'invention a pour objet un dispositif pour la commande automatique du réglage de la position d'un siège réglable à l'aide d'au moins un moteur alimenté par une source d'énergie et à actionnement manuel. Ce dispositif est remarquable en ce qu'il comprend un boîtier formé d'un alvéole équipé d'un agencement pour recevoir, supporter et connecter électriquement au moins une carte qui porte un circuit électronique et qui est pourvue d'un connecteur au moteur et à la source d'énergie, d'une chambre équipée de moyens pour insérer une carte à puce et échanger et mémoriser des informations avec celle-ci relatives à la position du siège, d'un conduit reliant alvéole et chambre et destiné à recevoir un raccord électrique pour connecter électriquement l'agencement de l'alvéole et les moyens de la chambre, et une fixation pour assujettir le boîtier au siège.

D'autres caractéristiques de l'invention apparaîtront à la lecture de la description et des revendications qui suivent ainsi qu'à l'examen du dessin annexé, donné seulement à titre d'exemple, où:
- la Figure 1 est une vue perspective partielle schématique d'un siège de véhicule automobile terrestre équipé d'un dispositif selon l'invention;

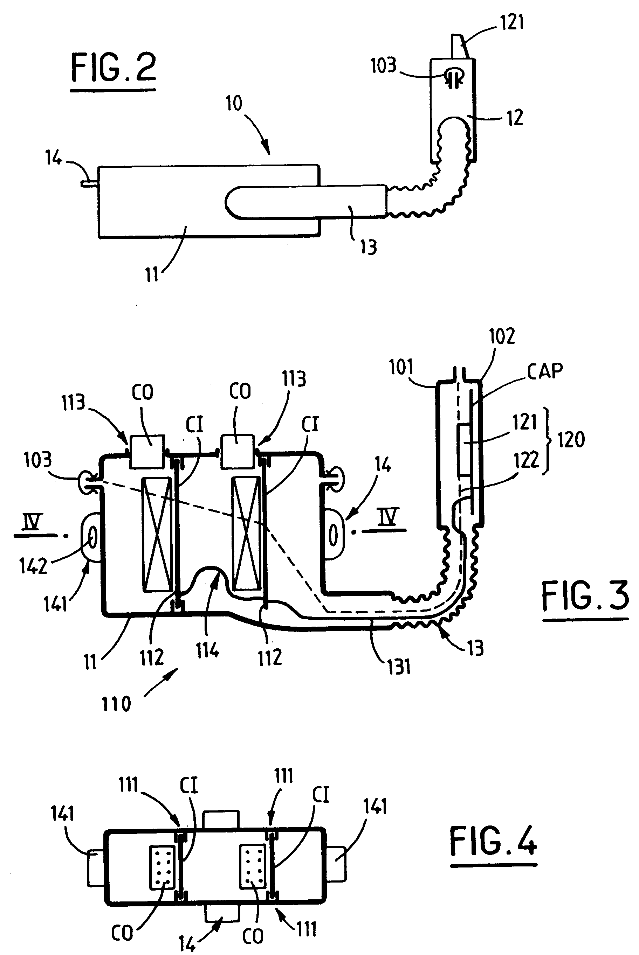

- la Figure 2 est une vue extérieure, de l'avant, du dispositif de la Figure 1;
- la Figure 3 est une vue de dessus en coupe schématique de la Figure 2; et
- la Figure 4 est une vue partielle, en coupe selon le plan IV-IV de la Figure 3.

Les sièges articulés et réglables notamment à usage des véhicules automobiles terrestres étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté. En particulier, il pourra se reporter au document précédemment cité pour plus ample information.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un dispositif selon l'invention avant d'en exposer au besoin la fabrication, et le montage et le fonctionnement.

On décrira le dispositif selon l'invention dans son application particulière à un siège articulé réglable de véhicule automobile terrestre du type de celui indiqué par exemple dans le document précité.

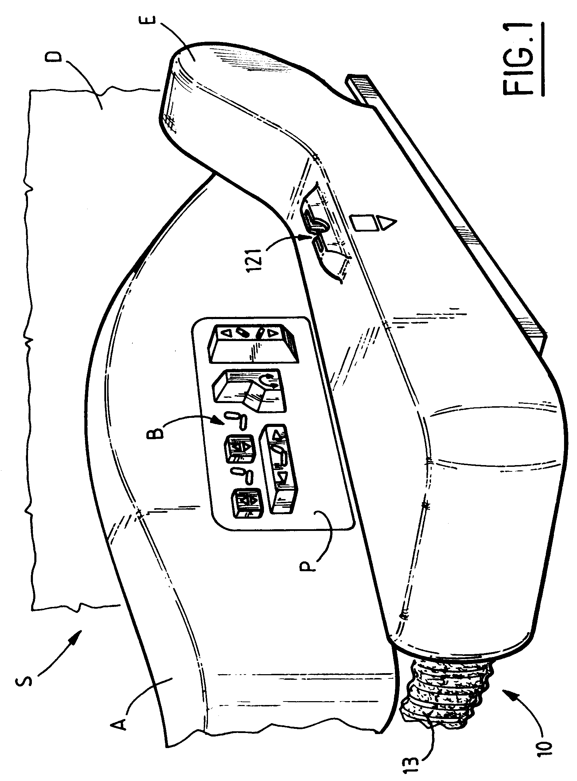

Comme on le verra par la suite, le dispositif selon l'invention est destiné à être assujetti à un siège de manière à être placé pour partie sous la partie antérieure de l'assise de celui-ci et pour partie sur l'un des côtés latéraux de cette dernière. Ceci est clairement illustré sur la Figure 1.

Comme on le voit, un dispositif selon l'invention comprend un boîtier 10 fait notamment d'un alvéole 11, d'une chambre 12, d'un conduit 13 et d'une fixation 14.

Le boîtier 10 est fait, par exemple, de deux demi-coquilles 101 et 102 réunies par des moyens d'assemblage 103 de tout type approprié connu tels que vis, rivets, pinces élastiques, soudure, colle, etc. Ces coquilles sont, par exemple, faites en une matière synthétique appropriée qui comprend s'il y a lieu des charges et des fibres de renfort, et qui est travaillée et mise en forme par des techniques traditionnelles par exemple par moulage par injection ou compression.

L'alvéole 11 a une configuration générale parallélépipédique et est relativement plat. L'alvéole 11 est équipé d'un agencement 110 pour recevoir, supporter et connecter électriquement au moins une carte CI portant un circuit électronique et pourvue d'un connecteur CO. L'agencement 110 comprend au moins un guide 111 telle une gorge ou une rainure ménagée sur les parois intérieures en vis-à-vis de l'alvéole pour recevoir et maintenir au moins une carte à circuit électronique, un bornier 112 pour brancher le raccord électrique, et au moins une ouverture 113 donnant depuis l'extérieur accès au connecteur de la carte à circuit électronique. L'autre partie du connecteur n'est pas illustrée; c'est cette dernière qui est reliée à un moteur et une source d'énergie classiques non représentés.

Les cartes à circuit électronique qui portent des composants discrets ou des circuits intégrés assurant des fonctions multiples ainsi que les connecteurs sont bien connus dans la technique et on ne s'y étendra pas davantage.

La chambre 12 a une configuration générale parallélépipédique et est relativement plate. La chambre 12 est équipée de moyens 120 pour insérer une carte "à puce" CAP et échanger et mémoriser des informations avec celle-ci qui sont relatives à la position du siège. Ces moyens 120 comprennent une fente 121 pour insérer une carte à puce CAP et un support récepteur 122 pour carte à puce. Sur la Figure 1, la chambre 12 est recouverte, pour des raisons esthétiques, par une enveloppe E, en tout matériau traditionnel, telle une matière synthétique appropriée. La fente 121 est de préférence dirigée vers le haut, au besoin plus ou moins inclinée par rapport à la verticale, pour commodité d'usage.

Les cartes "à puce" et les supports-récepteurs destinés à assurer leur mise en service par branchement à des circuits électroniques appropriés sont bien connus dans la technique on ne s'y étendra pas davantage.

Le conduit 13 relie l'alvéole 11 et la chambre 12, et est destiné à recevoir un raccord 131 électrique pour connecter électriquement l'agencement 110 de l'alvéole et les moyens 120 de la chambre, et en particulier le bornier 112 et le support récepteur 121 respectivement. Comme on le voit, le conduit 13 est, de préférence, coudé et s'il y a lieu localement flexible grâce à des ondulations par exemple en accordéon comme illustré. On observera que les orientations relatives de l'alvéole et de la chambre sont orthogonales.

La fixation 14 qui permet d'assujettir le dispositif au siège en particulier à son assise, se présente par exemple sous la forme de pattes 141 transpercées de trous 142 destinés à recevoir des vis, rivets ou analogues. Ces pattes peuvent aussi se terminer par des crochets ou similaires et présenter une certaine élasticité de manière à permettre une fixation par simple encliquetage réversible ou non, comme il est bien connu.

Tous les constituants d'un dispositif selon l'invention sont réunis, assemblés et montés comme cela ressort clairement des figures du dessin.

La mise en oeuvre du dispositif selon l'invention est la suivante.

On suppose qu'un utilisateur prend place pour la première fois sur un siège articulé réglable motorisé à actionnement manuel qui est équipé d'un dispositif selon l'invention.

Il introduit sa carte à puce dans la fente d'insertion ménagée sur la chambre et, ceci fait, il règle à sa convenance tous les éléments mobiles du siège en actionnant manuellement les différents boutons ou touches, manettes B portés par une platine P montée par exemple sur un côté de l'assise A comme illustré sur la Figure 1. Ces boutons sont identifiés par des symboles qui donnent la nature et le sens de l'intervention et l'élément du siège affecté par le réglage considéré. Ceci est classique.

Tous les réglages opérés et choisis ainsi sont alors automatiquement mémorisés sur la carte à puce.

En quittant le siège, l'occupant reprend sa carte à puce.

Ultérieurement lorsque cet utilisateur succède à un autre occupant, il lui suffit alors d'introduire sa carte personnelle portant les informations de réglage enregistrées, dans la fente avant d'avoir pris place sur le siège ou une fois assis pour que le siège reprenne automatiquement la configuration qui avait été choisie antérieurement au cas où cette configuration serait différente de celle mémorisée.

Toutefois, étant donné qu'on a adopté le choix selon lequel les réglages manuels ont priorité sur ceux opérés automatiquement à l'aide de la carte à puce, il est alors toujours possible de modifier les réglages par actionnement manuel et les retouches de réglage opérées sont alors automatiquement mémorisées à la place des précédentes auxquelles elles se substituent.

Le réglage du siège par actionnement manuel est toujours accessible à tout moment, qu'une carte à puce soit insérée ou non.

De préférence sur une carte à puce personnelle affectée à un occupant potentiel déterminé, on peut mémoriser une position qui correspond au cas où cet occupant est conducteur et une position qui correspond au cas où cet occupant est passager afin de satisfaire à la situation où tous les sièges, en particulier les sièges avant, sont tous équipés d'un dispositif selon l'invention.

On comprend donc que grâce au dispositif suivant l'invention, il est possible d'équiper un parc ou flotte de véhicules de manière qu'avec une même carte à puce affectée à un utilisateur particulier, on obtienne toujours les mêmes réglages d'un siège quel que soit le véhicule utilisé de ce parc sous réserve bien sûr que la configuration de l'habitacle et la cinématique des sièges soient identiques sur tous les véhicules équipés de ce parc.

On observera aussi que pour un siège donné, le nombre des utilisateurs n'est pas limité puisque les paramètres de réglage sont mémorisés non pas dans le siège mais sur chaque carte à puce affectée à un utilisateur identifié.

De plus on observera qu'un dispositif selon l'invention peut être inclus dans un système "anti-vol". En l'effet le fonctionnement d'un siège équipé d'un dispositif selon l'invention peut être assuré d'une manière telle que le "contact" du véhicule étant "coupé" et la carte à puce étant retirée, le siège du conducteur et son dossier se rapprochent et se "plaquent" automatiquement contre le volant pour rendre la conduite du véhicule impossible. Seule l'utilisation d'une carte à puce portant un code approprié autorisant un usage du véhicule permettra au siège conducteur de reprendre une position permettant la conduite normale du véhicule, que le "contact" du véhicule soit ou non "mis".

Le pilotage du réglage automatique d'un siège à l'aide d'un dispositif selon l'invention est tel que le réglage automatique peut être arrêté avant la fin du fonctionnement, soit lorsque la carte à puce est retirée avant la fin des réglages soit lorsque l'énergie emmagasinée dans la batterie est insuffisante pour assurer le fonctionnement des moteurs opérant les réglages. Dans un tel cas, l'insuffisance de la charge de la batterie est signalée par un témoin approprié par exemple lumineux placé à proximité de la fente d'insertion de la carte à puce ou sur le tableau de bord du véhicule.

D'autres circonstances peuvent aussi se présenter pour lesquelles le réglage automatique ne se fait pas. C'est le cas par exemple si la position qu'occupe le siège correspond au réglage mémorisé sur la carte à puce introduite, ou bien si la carte à puce n'est pas introduite correctement ou bien si la carte à puce introduite n'est pas une carte à puce adaptée au réglage du siège considéré.

On observera que la mémorisation sur la carte à puce des réglages opérés sur le siège, se fait uniquement dans les conditions suivantes : une carte à puce appropriée a été insérée dans le dispositif et les réglages ont été modifiés en agissant sur les boutons d'actionnement manuel. Lorsque ces conditions sont respectées, la mémorisation des réglages sur la carte à puce est faite à la fin du dernier réglage manuel obtenu.

Ce qui précède met bien en lumière les particularités distinctives de l'invention, montre son intérêt et indique les avantages qu'elle procure.

## Revendications

**1 -** Dispositif pour la commande automatique du réglage de la position d'un siège réglable à l'aide d'au moins un moteur alimenté par une source d'énergie et à actionnement manuel, caractérisé en ce qu'il comprend un boîtier (10) formé d'un alvéole (11) équipé d'un agencement (110) pour recevoir, supporter et connecter électriquement au moins une carte qui porte un circuit électronique et qui est pourvue d'un connecteur au moteur et à la source d'énergie, d'une chambre (12) équipée de moyens (120) pour insérer une carte à puce et échanger et mémoriser des informations avec celle-ci relatives à la position du siège, d'un conduit (13) reliant alvéole (11) et chambre (12) et destiné à recevoir un raccord (131) électrique pour connecter électriquement l'agencement (110) de l'alvéole (11) et les moyens (120) de la chambre (12), et d'une fixation (14) pour assujettir le boîtier (10) au siège.

**2 -** Dispositif selon la revendication 1, caractérisé en ce que l'alvéole (11) et la chambre (12) sont d'une configuration générale parallélépipédique et relativement plate

**3 -** Dispositif selon la revendication 1 ou 2, caractérisé en ce que le conduit (13) est coudé voire localement flexible.

**4 -** Dispositif selon l'une quelconque des revendications 2 et 3, caractérisé en ce que les orientations relatives de l'alvéole (11) et de la chambre (12) sont orthogonales.

**5 -** Dispositif selon l'une quelconque des revendications 1 à 4, caractérisé en ce que l'agencement (110) comprend au moins un guide (111) pour recevoir et maintenir une carte à circuit électronique, un bornier (112) pour brancher le raccord électrique (131), et au moins une ouverture (113) donnant accès au connecteur de la carte à circuit électronique.

**6 -** Dispositif selon l'une quelconque des revendications 1 à 5, caractérisé en ce que les moyens (120) comprennent une fente (121) d'insertion pour introduire une carte à puce et un support-récepteur (122) branché au raccord électrique (131) et destiné à recevoir une carte à puce.

**7 -** Dispositif selon l'une quelconque des revendications 1 à 6, caractérisé en ce que la fixation (14) comprend au moins une patte (141).

**8 -** Dispositif selon l'une quelconque des revendications 1 à 7, caractérisé en ce que le boîtier (10) comprend deux demi-coquilles (101, 102) assemblées.

**9 -** Application d'un dispositif conforme à l'une quelconque des revendications 1 à 8 à un siège de véhicule automobile terrestre selon laquelle l'alvéole (11) est placé sous l'assise (A) du siège (S) et la chambre (12) est placée sur un côté de celle-ci (A) de manière que la fente d'insertion (121) soit dirigée vers le haut.

**10 -** Application selon la revendication 9 où l'actionnement manuel du réglage du siège est prioritaire par rapport à celui provoqué par une carte à puce insérée.
